# EUROPEAN PATENT SPECIFICATION

(11) **EP 4 477 845 B1**
(45) Date of publication and mention of the grant of the patent: **29.07.2026**
(21) Application number: 24181106.6
(22) Date of filing: 10.06.2024
(51) Int. Cl.: F01D 11/24, F01D 25/10, F01D 25/14, F02C 6/18, F02C 7/16, F02C 3/30

(54) **WATER ACTIVE TURBINE CLEARANCE CONTROL**
WASSERAKTIVE TURBINENSPIELSTEUERUNG
COMMANDE DE JEU DE TURBINE ACTIVE DANS L'EAU

(30) Priority: 08.06.2023 US 202318331503
(43) Date of publication of application: 18.12.2024
(73) Proprietor: RTX Corporation, Farmington, CT 06032 (US)
(72) Inventor: SOBANSKI, Jon Erik, Farmington, 06032 (US)
(74) Representative: Dehns

(56) References cited:
- EP-B1- 3 091 196
- US-A- 4 896 499
- US-A1- 2014 030 066
- US-B2- 10 655 543

## Description

### TECHNICAL FIELD

The present invention relates generally to an aircraft propulsion system that includes a condenser for extracting water from an exhaust gas flow. More particularly, the invention relates to an active turbine clearance control that uses water extracted from the exhaust gas flow.

### BACKGROUND

Reduction and/or elimination of carbon emissions generated by aircraft operation is a stated goal of aircraft manufacturers and airline operators. Turbine engines compress incoming core airflow, mix the compressed airflow with fuel that is ignited in a combustor to generate an exhaust gas flow. Steam injection can provide improved propulsive efficiencies. Water recovered from the exhaust gas flow may be transformed into steam using thermal energy from the exhaust gas flow. Water recovery and steam generation present opportunities for integration into various engine systems and provide a means of thermal energy recovery not present in conventional turbine engine architectures. The following documents disclose related prior art:
US 4 896 499 A: An open-cycle compression-intercooled gas generator. The air is intercooled at a particular and specific pressure to minimize the overall combined cycle efficiency degradation when said gas generator, diffuser, reheat combustor and power turbine are operating in conjunction with a heat recovery boiler and a steam or vapor turbine. Air is used to cool the aero gas-turbine casings to control rotating blade-tip clearance.
US 10 655 543 B2: A gas turbine combined cycle plant, wherein air is used to cool the aero gas-turbine casings to control rotating blade-tip clearance.
EP 3 091 196 Bl: A system and a method for improving exhaust energy recovery through the utilization of spent clearance control impingement fluid like air and steam.
US 2014/030066 Al: An active clearance control system for gas turbine engines using thermal control air.

### SUMMARY

According to an aspect of the present invention, there is provided a turbine engine assembly as claimed in claim 1. Some embodiments of this aspect are provided in claims dependent from claim 1.

According to another aspect of the present invention, there is provided a method of operating a gas turbine engine as claimed in claim 13. Some embodiments of this aspect are provided in claims dependent from claim 13.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system embodiment.
Figure 2 is a schematic cross-sectional view of an example active clearance control system.
Figure 3 is a side schematic view of the example active clearance control system shown in Figure 2.
Figure 4 is a schematic cross-sectional view of another example active clearance control system.
Figure 5 is a side schematic view of the example active clearance control system shown in Figure 4.
Figure 6 is a schematic view of another example aircraft propulsion system embodiment.
Figure 7 is a schematic cross-sectional view of another example active clearance control system.

### DETAILED DESCRIPTION

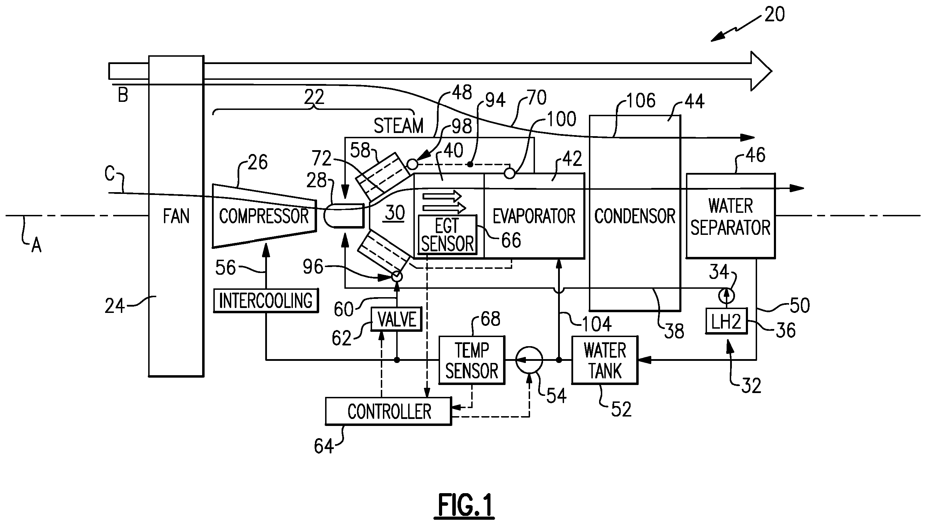

Figure 1 schematically illustrates an example propulsion system 20 that includes an active clearance control (ACC) system 58 that utilizes a flow of water 60 for cooling and controlling thermal growth of a case structure 72. The flow of water 60 controls thermal expansion to control a clearance between rotating blades and an inner surface of the case structure 72. Heat absorbed by the flow of water 60 is recovered by aiding steam generation within an evaporator 42.

The example propulsion system 20 includes a fan section 24 and a core engine section 22. The core engine section 22 includes a compressor section 26, a combustor section 28 and the turbine section 30 disposed along an engine longitudinal axis A. The fan section 24 drives inlet airflow along a bypass flow path B, while the compressor section 26 draws air in along a core flow path C. The inlet airflow is compressed and communicated to the combustor section 28 where the compressed core airflow is mixed with a fuel flow 38 and ignited to generate exhaust gas flow 40. The exhaust gas flow 40 expands through the turbine section 30 where energy is extracted to generate a mechanical power output utilized to drive the fan section 24 and the compressor section 26.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

A fuel system 32 including at least a fuel tank 36 and a fuel pump 34 provide the fuel flow 38 to the combustor 28. The example fuel system 32 is configured to provide a hydrogen-based fuel such as a liquid hydrogen (LH₂). Although hydrogen is disclosed by way of example, other non-carbon-based fuels could be utilized and are within the contemplation of this disclosure. Moreover, the disclosed features may also be beneficial in an engine configured to operate with traditional carbon fuels and/or biofuels, such as sustainable aviation fuel.

An evaporator system 42 and condenser 44 are disposed downstream of the turbine section 30 and receive the exhaust gas flow 40. The evaporator system 42 utilizes thermal energy from the exhaust gas flow 40 to generate a steam flow 48 from a water flow 50 extracted by the condenser 44 and separated in a water separator 46.

The condenser 44 cools the exhaust gas flow 40 to extract water that is separated from the gas in the water separator 46 and gathered in a tank 52. A pump 54 pressurizes water for communication from the water tank 52. In one disclosed example embodiment, a portion of the fuel flow 38 is utilized as a heat sink to cool the exhaust gas flow 40 in the condenser 44. In another example embodiment, a cooling ram air flow 70 is used as the cold sink. Other cold sink flows may be utilized to cool the exhaust gas flow 40 within the condenser 44 and are within the contemplation and scope of this disclosure.

Water 50 recovered with the condenser 44 may also be provided as an intercooling water flow 56 to the compressor section 26. The water flow 56 is injected into a location within the compressor section 26 to cool the core flow and thereby increase mass flow. The increased mass flow improves compressor operating efficiencies. The example intercooling water flow 56 is shown schematically and may be injected at any location within the compressor section 26 or upstream of the combustor 28.

The steam flow 48 from the evaporator 42 is injected into the core flow path at or upstream of the combustor 28 and increases mass flow through the turbine section 30 and thereby increase engine power and efficiency. The propulsion system 20 has an increased power output from the injected steam 48 due to an increasing mass flow through the turbine section 30 without a corresponding increase in work from the compressor section 26. Although the steam flow 48 is shown as being injected into the combustor 28, the steam flow 48 may be injected at other locations along the core flow path C and remain within the contemplation and scope of this disclosure.

The active clearance control (ACC) system 58 receives a flow of water 60 that cools the case structure 72 to control thermal growth and thereby a clearance between a blade tip and an inner surface of the case structure 72. A control valve 62 governs a rate of flow of water to the ACC system 58 based on information indicative of engine operation. In one example embodiment, a controller 64 receives information relating to temperatures of the exhaust gas flow 40 from a first temperature sensor 66. A second temperature sensor 68 provides information indicative of a temperature of the flow of water 60. The controller 64 utilizes the temperature information and controls the valve 62 to direct the flow of water 60.

The flow of water 60 accepts heat from the case structure 72 that is utilized to aid in the generation of the steam flow 48. Heated water flow 94 exhausted through an outlet 98 is communicated to an inlet 100 of the evaporator system 42. The preheated water flow 94 is mixed with a non-heated water flow 104 in the evaporator system 42 and heated by the exhaust gas flow 40 to generate the steam flow 48. The heated water flow 94 reduces the amount of heat required to transform the liquid water into the steam flow 48. The heat absorbed by the water from the case structure 72 is thereby recovered rather than simply exhausted to the ambient environment.

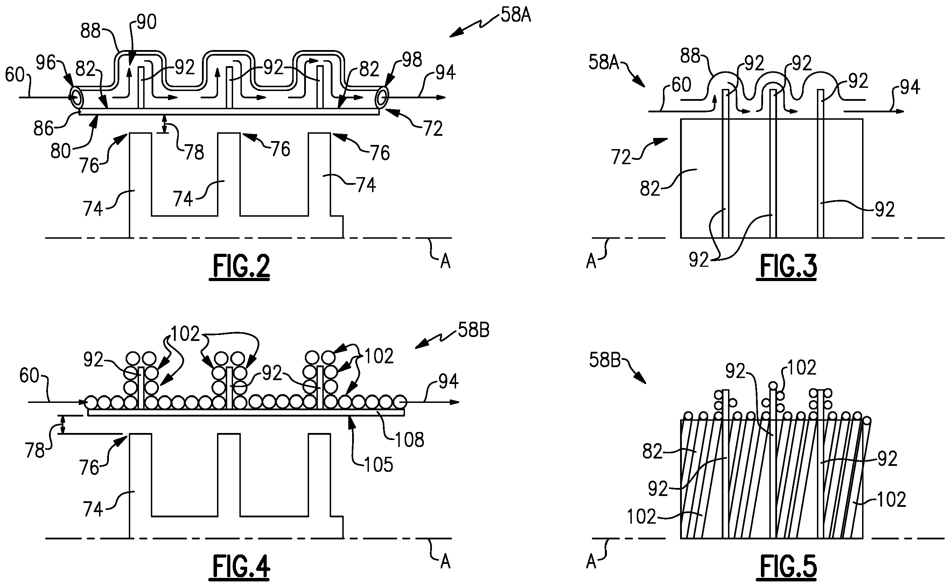

Referring to Figures 2 and 3, with continued reference to Figure 1, an example ACC system 58A is schematically shown and includes a cooling passage 90 defined between an inner wall 86 and outer wall 88. The inner wall 86 includes an inner surface 80. In this disclosed example embodiment, the case structure 72 is a turbine case that surrounds rotatable turbine blades 74 with tips 76. A clearance gap 78 between the tips 76 and the inner surface 80 is controlled by limiting thermal expansion of the case structure 72. The example case structure 72 is shown schematically by way of example and may include additional components that are controlled to maintain the desired clearance.

The cooling passage 90 is defined within the radial space between the inner wall 86 and the outer wall 88 and is disposed about rib members 92. The rib members 92 extend outward from an outer surface 82 of the inner wall 86 and are arranged axially at a location that corresponds with one of the turbine blades 74. The rib members 92 provide additional localized surface area to concentrate cooling in locations that correspond with the location of the blades 74. The example rib members 92 extend circumferentially about the case structure 72.

The example cooling passage 90 includes an inlet for the cooling water flow 60 and an outlet 98 for a heated water flow 94. The heated water flow 94 is communicated to the inlet 100 of the evaporator system 100. In this example embodiment, the inlet 96 is upstream of the outlet 94 relative to the direction of the exhaust gas flow 40. Accordingly, the cooling water flow 60 and the exhaust gas flow 40 flow in a common direction. It is within the contemplation of this disclosure that the cooling water flow could be arranged to flow counter to the exhaust gas flow 40. Moreover, although a single inlet 96 and outlet 98 are shown by way of example, multiple inlets and outlets may be utilized and are within the contemplation of this disclosure.

Referring to Figures 4 and 5, with continued reference to Figure 1, another example ACC system 58B is disclosed includes a plurality of conduits 102 disposed about the case structure 72. The conduits 102 define cooling passages for the cooling water flow 60. The conduits 102 are wound about the wall 108 that defines the case structure 72. The conduits 102 may be spirally, radially or axially arranged to provide thermal communication between the case structure 72 and the cooling water flow 60. The conduits 102 may be arranged about each of the rib members 92 to enhance thermal control over the case structure 72.

Although example embodiments of the cooling flow passages are shown and described, other passage arrangements that provide thermal communication between the cooling water flow 60 and the case structure 72 could and are within the contemplation and scope of this disclosure.

The control valve 62 is provided to control cooling water flow 60 into the cooling passage 90. The controller 64 is provided and programmed to operate the control valve 62 based on the temperature information provided by the temperature sensors 66, 68. The control valve 62 may provide proportional control of water flow to proportion the cooling water flow 60 to maintain and control the thermal growth of the case structure 72. The control valve 62 is shown schematically and can be one valve or a system of valves that provide control of the cooling water flow 60.

The controller 64 is disclosed by way of example as programmed to operate the control valve 62 based on information from the temperature sensors 66 and 68 along with other engine operating information. The operating information can include monitored engine parameters such as shaft speeds, pressures, temperatures within the propulsion system 20 and information indicative of ambient conditions.

The example controller 64 is a device and system for performing necessary computing or calculation operations. The example controller 64 may be part of the full authority digital engine control (FADEC) and/or be specially constructed for this purpose, or it may comprise at least a general-purpose computer selectively activated or reconfigured by a computer program stored in the computer. The controller 64 may further be a dedicated controller, or may be a program stored on an engine or aircraft controller.

The controller 64 may include a computer program directing operation. Such a computer program and also data required for its execution may be stored in a computer readable storage medium, such as, but is not limited to, any type of disk including floppy disks, optical disks, CD-ROMs, magnetic-optical disks, read-only memories (ROMs), random access memories (RAMS), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

Referring to Figure 1, with reference to Figure 2, in one operational embodiment, gas flow 40 through the evaporator system 42 generates steam flow 48 that is injected into the combustor 28. As heat in the gas flow 40 is used to generate steam, it cools and is communicated to the condenser 44. In the condenser 44, the gas flow is further cooled by rejecting heat to the cooling fuel flow 38 or the ram air flow 70. The gas flow 40 is cooled to the point where liquid water condenses, is separated in the water separator 46 and routed to the water tank 52. The remaining gas flow is exhausted to the ambient environment.

Water from the tank 52 is pressurized by the water pump 54 and communicated as the cooling flow 60 into the ACC system 58. The cooling water flow 60 accepts heat from the case structure 72 to control thermal expansion and thereby the clearance 78 between blade tips 76 and an inner surface 80 of the case structure 72. The amount of cooling water flow 60 is controlled by the controller 64 through operation of the control valve 62.

The exhausted heated water flow 94 from the cooling passage 90 is routed to the evaporator system 42 where additional heat is added to generate the steam flow 48. Accordingly, the thermal energy absorbed by the water is recovered by reducing the amount of additional heat required to generate the steam flow 48 in the evaporator system 42.

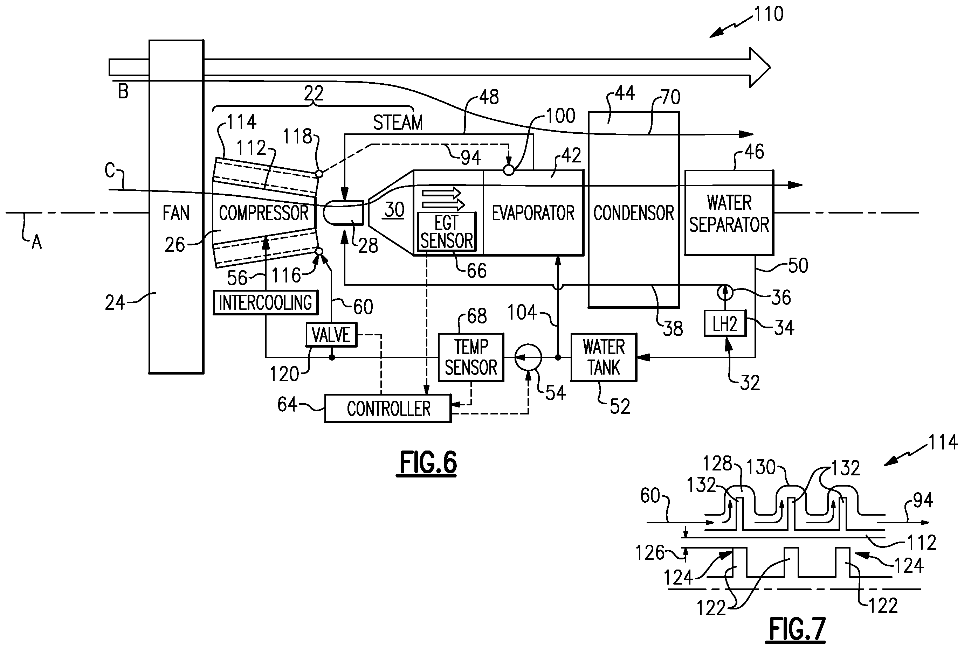

Referring to Figures 6 and 7 another example propulsion system 110 is schematically shown and includes an ACC system 114 for controlling clearances between tips 124 of rotating blades 122 in the compressor section 26 and an inner surface of a compressor case 112. A control valve 120 controls the cooling water flow 60 to the ACC system 114. The example ACC system 114 operates by controlling thermal expansion of the compressor case structure 112 and thereby the clearance 126 between tips 124 of rotating compressor blades 122 (Figure 7). The cooling water flow 60 flows through a cooling passage 128 defined about the compressor case structure 112. The cooling passage 128 includes an inlet 116 that receives the cooling water flow 60 and an outlet 118 through which a heated water flow 94 is exhausted. In one example embodiment, the cooling passage is defined between an outer wall 130 and the compressor case structure 112. Rib members 132 may be located to correspond with the rotating compressor blades 122 to locally improve thermal communication.

The cooling water flow 60 accepts heat from the compressor case structure 112 and leaves the cooling passage 128 as a heated water flow 94. The heated water flow 94 is communicated to the inlet of the evaporator system 42 for transformation into the steam flow 48. The heated water flow 94 is mixed with a water flow 94 and vaporized utilizing heat from the exhaust gas flow 40. The heated water flow 94 reduces the amount of heat required to generate the steam flow 48 and thereby recovers heat energy that may otherwise go unused. Accordingly, the ACC system 114 operates to improve compressor efficiency by maintaining clearances within predefined tolerances and recovers heat energy that may otherwise go unused.

Accordingly, the example ACC systems 58, 114 utilize cooling water flow to control tip to case clearances and uses thermal energy recovered from cooling the case structure to aid in the generation of steam flow in the evaporator to further improve engine efficiency.

Although an example embodiment has been disclosed, a worker of ordinary skill in this art would recognize that certain modifications would come within the scope of this invention. For that reason, the following claims should be studied to determine the scope and content of this invention.

## Claims

1. A turbine engine assembly comprising:
a compressor section (26) configured to compress an inlet airflow;
a combustor section (28) in which the compressed inlet airflow is mixed with fuel and ignited to generate an exhaust gas flow (40) that is communicated through a core flow path (C); and
a turbine section (30) configured to utilize expansion of the exhaust gas flow (40) to generate a mechanical power output,
**characterised in that** the turbine engine assembly further comprises:
a condenser (44) configured to extract water from the exhaust gas flow (40);
an active clearance control system (58;58A;58B) configured to utilize water (50) extracted from the exhaust gas flow (40) to control a clearance (78;126) between a tip (76;124) of a rotating blade (74;122) and a case structure (72;112) by controlling thermal growth of the case structure (72;112); and
an evaporator system (42) configured to utilize thermal energy from the exhaust gas flow (40) to transform water (50) extracted from the exhaust gas flow (40) into a steam flow (48), wherein a portion of water (94) utilized in the active clearance control system (58;58A;58B) is communicated to the evaporator system (42).

2. The turbine engine assembly as recited in claim 1, wherein the active clearance control system (58;58A;58B) includes a cooling passage (90;102;128) through which a cooling water flow (60) flows, the cooling passage (90;102;128) is configured to provide thermal contact between the case structure (72;112) and the cooling water flow (60) and includes an inlet (96;116) and an outlet (98;118).

3. The turbine engine assembly as recited in claim 2, wherein the case structure (72;112) includes an inner wall (86) spaced radially apart from an outer wall (88) and the cooling passage (90) is at least partially defined within a radial space between the inner wall (86) and the outer wall (88).

4. The turbine engine assembly as recited in claim 2, wherein the cooling passage (102) comprises one or more conduits (102) in thermal contact with the case structure (72).

5. The turbine engine assembly as recited in claim 4, wherein the one or more conduits (102) are disposed about an outer periphery (108) of the case structure (72).

6. The turbine engine assembly as recited in any of claims 2 to 5, further including a control valve (62;120) configured to proportionally control a flow rate of the cooling water flow (60) to the inlet (96;116).

7. The turbine engine assembly as recited in claim 6, further including a controller (64) programmed to operate the control valve (62;120) to adjust the flow rate of the cooling water flow (60) based on a measured engine temperature and/or a current engine operating condition.

8. The turbine engine assembly as recited in any of claims 2 to 7, wherein the case structure (72;112) includes a rib member (92;132) disposed on a radially outer surface (82) of the case structure (72;112) at an axial location corresponding to a position of the rotatable blade (74;122) and the cooling passage (90;102;128) is configured to place the cooling water flow (60) in the thermal contact with the rib member (92;132).

9. The turbine engine assembly as recited in any preceding claim, wherein the compressor section (26) includes a plurality of rotatable compressor blades (122) and the case structure (112) comprises a compressor case (112).

10. The turbine engine assembly as recited in any of claims 1 to 8, wherein the turbine section (30) includes a plurality of rotatable turbine blades (74) and the case structure (72) comprises a turbine case (72).

11. The turbine engine assembly as recited in any preceding claim, further including a fuel system (32) configured to provide a non-carbon-based fuel to the combustor section (28).

12. The turbine engine assembly as recited in any preceding claim, further including an intercooling system configured to utilize a flow of water (56) for cooling a portion of the compressed inlet flow.

13. A method of operating a gas turbine engine, the method comprising:
generating an exhaust gas flow (40) that is communicated through a core flow path (C);
expanding the gas flow (40) through a turbine section (30) to generate a mechanical power output;
extracting water from the exhaust gas flow (40) in a condenser (44);
controlling a clearance (78;126) between a tip (76;124) of a rotating blade (74;122) and a fixed case structure (72;112) by controlling thermal growth of the fixed case structure (72;112) by selectively providing a water flow (60) in thermal contact with the fixed case structure (72;112);
communicating the water flow (60,94) from the fixed case structure (72;112) to an evaporator system (42); and
transforming the water flow (60,94) to a steam flow (48) using heat from the exhaust gas flow (40) in the evaporator system (42).

14. The method as recited in claim 13, further including monitoring a temperature of the fixed case structure (72;112) and controlling the water flow (60) in thermal contact with the fixed case structure (72;112) to maintain a predefined clearance (78;126) between the tip (76;124) of the rotating blade (74;122) and an inner surface (80) of the fixed case structure (72;112).

15. The method as recited in claim 14, proportionally controlling the water flow (60) with a control valve (62;120) based on a sensed temperature of the fixed case structure (72;112) and/or a current engine operating parameter.

## Patentansprüche

1. Gasturbinentriebwerksanordnung, umfassend:
einen Verdichterabschnitt (26), der konfiguriert ist, um einen Einlassluftstrom zu verdichten;
einen Brennkammerabschnitt (28), in dem der verdichtete Einlassluftstrom mit Brennstoff gemischt und entzündet wird, um einen Abgasstrom (40) zu erzeugen, der durch einen Kernströmungspfad (C) geleitet wird; und
einen Turbinenabschnitt (30), der konfiguriert ist, um eine Expansion des Abgasstroms (40) zu nutzen, um eine mechanische Ausgangsleistung zu erzeugen,
**dadurch gekennzeichnet, dass** die Gasturbinentriebwerksanordnung ferner umfasst:
einen Kondensator (44), der konfiguriert ist, um Wasser aus dem Abgasstrom (40) zu extrahieren;
ein aktives Spielsteuerungssystem (58;58A;58B), das konfiguriert ist, um aus dem Abgasstrom (40) extrahiertes Wasser (50) zu nutzen, um ein Spiel (78;126) zwischen einer Spitze (76;124) einer rotierenden Laufschaufel (74;122) und einer Gehäusekonstruktion (72;112) zu steuern, indem eine thermische Ausdehnung der Gehäusekonstruktion (72;112) gesteuert wird; und
ein Verdampfersystem (42), das konfiguriert ist, um thermische Energie aus dem Abgasstrom (40) zu nutzen, um aus dem Abgasstrom (40) extrahiertes Wasser (50) in einen Dampfstrom (48) umzuwandeln, wobei ein Teil von Wasser (94), das im aktiven Spielsteuerungssystem (58;58A;58B) genutzt wird, zum Verdampfersystem (42) geleitet wird.

2. Gasturbinentriebwerksanordnung nach Anspruch 1, wobei das aktive Spielsteuerungssystem (58;58A;58B) einen Kühlkanal (90;102;128) einschließt, durch den ein Kühlwasserstrom (60) strömt, der Kühlkanal (90;102;128) konfiguriert ist, um einen thermischen Kontakt zwischen der Gehäusekonstruktion (72;112) und dem Kühlwasserstrom (60) bereitzustellen, und einen Einlass (96;116) und einen Auslass (98;118) einschließt.

3. Gasturbinentriebwerksanordnung nach Anspruch 2, wobei die Gehäusekonstruktion (72;112) eine Innenwand (86) einschließt, die radial von einer Außenwand (88) beabstandet ist, und der Kühlkanal (90) mindestens teilweise innerhalb eines radialen Raums zwischen der Innenwand (86) und der Außenwand (88) definiert ist.

4. Gasturbinentriebwerksanordnung nach Anspruch 2, wobei der Kühlkanal (102) eine oder mehrere Leitungen (102) in thermischem Kontakt mit der Gehäusekonstruktion (72) umfasst.

5. Gasturbinentriebwerksanordnung nach Anspruch 4, wobei die eine oder mehreren Leitungen (102) um einen Außenumfang (108) der Gehäusekonstruktion (72) herum angeordnet sind.

6. Gasturbinentriebwerksanordnung nach einem der Ansprüche 2 bis 5, ferner einschließend ein Steuerventil (62;120), das konfiguriert ist, um eine Durchflussrate des Kühlwasserstroms (60) zum Einlass (96;116) proportional zu steuern.

7. Gasturbinentriebwerksanordnung nach Anspruch 6, ferner einschließend eine Steuerung (64), die programmiert ist, um das Steuerventil (62;120) zu betätigen, um die Durchflussrate des Kühlwasserstroms (60) basierend auf einer gemessenen Triebwerkstemperatur und/oder einer aktuellen Triebwerksbetriebsbedingung anzupassen.

8. Gasturbinentriebwerksanordnung nach einem der Ansprüche 2 bis 7, wobei die Gehäusekonstruktion (72;112) ein Rippenelement (92;132) einschließt, das an einer radial äußeren Oberfläche (82) der Gehäusekonstruktion (72;112) an einer axialen Stelle angeordnet ist, die einer Position der rotierbaren Laufschaufel (74;122) entspricht, und der Kühlkanal (90;102;128) konfiguriert ist, um den Kühlwasserstrom (60) in den thermischen Kontakt mit dem Rippenelement (92;132) zu bringen.

9. Gasturbinentriebwerksanordnung nach einem der vorhergehenden Ansprüche, wobei der Verdichterabschnitt (26) eine Vielzahl von rotierbaren Verdichterschaufeln (122) einschließt und die Gehäusekonstruktion (112) ein Verdichtergehäuse (112) umfasst.

10. Gasturbinentriebwerksanordnung nach einem der Ansprüche 1 bis 8, wobei der Turbinenabschnitt (30) eine Vielzahl von rotierbaren Turbinenschaufeln (74) einschließt und die Gehäusekonstruktion (72) ein Turbinengehäuse (72) umfasst.

11. Gasturbinentriebwerksanordnung nach einem der vorhergehenden Ansprüche, ferner einschließend ein Brennstoffsystem (32), das konfiguriert ist, um dem Brennkammerabschnitt (28) einen nicht auf Kohlenstoff basierenden Brennstoff bereitzustellen.

12. Gasturbinentriebwerksanordnung nach einem der vorhergehenden Ansprüche, ferner einschließend ein Zwischenkühlsystem, das konfiguriert ist, um einen Strom von Wasser (56) zum Kühlen eines Teils des verdichteten Einlassstroms zu nutzen.

13. Verfahren zum Betreiben eines Gasturbinentriebwerks, wobei das Verfahren umfasst:
Erzeugen eines Abgasstroms (40), der durch einen Kernströmungspfad (C) geleitet wird;
Expandieren des Gasstroms (40) durch einen Turbinenabschnitt (30), um eine mechanische Ausgangsleistung zu erzeugen;
Extrahieren von Wasser aus dem Abgasstrom (40) in einem Kondensator (44);
Steuern eines Spiels (78;126) zwischen einer Spitze (76;124) einer rotierenden Laufschaufel (74;122) und einer feststehenden Gehäusekonstruktion (72;112) durch Steuern einer thermischen Ausdehnung der feststehenden Gehäusekonstruktion (72;112) durch selektives Bereitstellen eines Wasserstroms (60) in thermischem Kontakt mit der feststehenden Gehäusekonstruktion (72;112);
Leiten des Wasserstroms (60,94) von der feststehenden Gehäusekonstruktion (72;112) zu einem Verdampfersystem (42); und Umwandeln des Wasserstroms (60,94) in einen Dampfstrom (48) unter Verwendung von Wärme aus dem Abgasstrom (40) in dem Verdampfersystem (42).

14. Verfahren nach Anspruch 13, ferner einschließend das Überwachen einer Temperatur der feststehenden Gehäusekonstruktion (72;112) und das Steuern des Wasserstroms (60) in thermischem Kontakt mit der feststehenden Gehäusekonstruktion (72;112), um ein vordefiniertes Spiel (78;126) zwischen der Spitze (76;124) der rotierenden Laufschaufel (74;122) und einer Innenoberfläche (80) der feststehenden Gehäusekonstruktion (72;112) aufrechtzuerhalten.

15. Verfahren nach Anspruch 14, proportionales Steuern des Wasserstroms (60) mit einem Steuerventil (62;120) basierend auf einer erfassten Temperatur der feststehenden Gehäusekonstruktion (72;112) und/oder einem aktuellen Triebwerksbetriebsparameter.

## Revendications

1. Ensemble de moteur à turbine comprenant :
une section de compresseur (26) configurée pour comprimer un flux d'air d'entrée ;
une section de combustion (28) dans laquelle le flux d'air d'admission comprimé est mélangé avec du carburant et enflammé pour générer un flux de gaz d'échappement (40) qui est communiqué par un chemin d'écoulement central (C) ; et
une section de turbine (30) configurée pour utiliser l'expansion du flux de gaz d'échappement (40) pour générer une puissance mécanique de sortie,
**caractérisé en ce que** le moteur à turbine comprend en outre :
un condenseur (44) configuré pour extraire de l'eau du flux de gaz d'échappement (40) ;
un système de contrôle du jeu actif (58 ; 58A ; 58B) configuré pour utiliser de l'eau (50) extraite du flux de gaz d'échappement (40) afin de contrôler un jeu (78 ; 126) entre une extrémité (76 ;124) d'une aube rotative (74 ; 122) et une structure de boîtier (72 ; 112) en contrôlant la dilatation thermique de la structure de boîtier (72 ; 112) ; et
un système d'évaporateur (42) configuré pour utiliser l'énergie thermique du flux de gaz d'échappement (40) pour transformer de l'eau (50) extraite du flux de gaz d'échappement (40) en un flux de vapeur (48), une partie de l'eau (94) utilisée dans le système de contrôle du jeu actif (58 ; 58A ; 58B) étant communiquée au système d'évaporateur (42).

2. Ensemble moteur à turbine selon la revendication 1, dans lequel le système de contrôle du jeu actif (58 ; 58A ; 58B) comprend un passage de refroidissement (90 ; 102 ; 128) à travers lequel circule un flux d'eau de refroidissement (60), le passage de refroidissement (90 ; 102 ; 128) est configuré pour assurer un contact thermique entre la structure de boîtier (72 ; 112) et le flux d'eau de refroidissement (60) et comprend une entrée (96 ; 116) et une sortie (98 ; 118).

3. Ensemble moteur à turbine selon la revendication 2, dans lequel la structure de boîtier (72 ; 112) comprend une paroi intérieure (86) espacée radialement d'une paroi extérieure (88) et le passage de refroidissement (90) est au moins partiellement défini dans un espace radial entre la paroi intérieure (86) et la paroi extérieure (88).

4. Ensemble moteur à turbine selon la revendication 2, dans lequel le passage de refroidissement (102) comprend un ou plusieurs conduits (102) en contact thermique avec la structure de boîtier (72).

5. Ensemble moteur à turbine selon la revendication 4, dans lequel le ou les conduits (102) sont disposés autour d'une périphérie extérieure (108) de la structure de boîtier (72).

6. Ensemble moteur à turbine selon l'une quelconque des revendications 2 à 5, comprenant en outre une vanne de régulation (62 ; 120) configurée pour contrôler proportionnellement le débit du flux d'eau de refroidissement (60) vers l'entrée (96 ; 116).

7. Ensemble moteur à turbine selon la revendication 6, comprenant en outre un contrôleur (64) programmé pour actionner la vanne de régulation (62 ; 120) afin d'ajuster le débit du flux d'eau de refroidissement (60) en fonction d'une température moteur mesurée et/ou d'une condition de fonctionnement moteur actuelle.

8. Ensemble moteur à turbine selon l'une quelconque des revendications 2 à 7, dans lequel la structure de boîtier (72 ; 112) comprend un élément de nervure (92 ; 132) disposé sur une surface radialement extérieure (82) de la structure de boîtier (72 ; 112) à un emplacement axial correspondant à une position de l'aube rotative (74 ; 122) et le passage de refroidissement (90 ; 102 ; 128) est configuré pour placer le flux d'eau de refroidissement (60) en contact thermique avec l'élément de nervure (92 ; 132).

9. Ensemble moteur à turbine selon l'une quelconque des revendications précédentes, dans lequel la section de compresseur (26) comprend une pluralité d'aubes de compresseur rotatives (122) et la structure de boîtier (112) comprend un boîtier de compresseur (112).

10. Ensemble moteur à turbine selon l'une quelconque des revendications 1 à 8, dans lequel la section de turbine (30) comprend une pluralité d'aubes de turbine rotatives (74) et la structure de boîtier (72) comprend un boîtier de turbine (72).

11. Ensemble moteur à turbine selon l'une quelconque des revendications précédentes, comprenant en outre un système d'alimentation en carburant (32) configuré pour fournir un carburant non carboné à la section de chambre de combustion (28).

12. Ensemble moteur à turbine selon l'une quelconque des revendications précédentes, comprenant en outre un système de refroidissement intermédiaire configuré pour utiliser un flux d'eau (56) pour refroidir une partie du flux d'entrée comprimé.

13. Procédé de fonctionnement d'un moteur à turbine à gaz, le procédé comprenant :
la génération d'un flux de gaz d'échappement (40) qui est communiqué à travers un chemin d'écoulement central (C) ;
la dilatation du flux de gaz (40) à travers une section de turbine (30) pour générer une puissance mécanique de sortie ;
l'extraction d'eau du flux de gaz d'échappement (40) dans un condenseur (44) ;
le contrôle d'un jeu (78 ; 126) entre une extrémité (76 ; 124) d'une aube rotative (74 ; 122) et une structure de boîtier fixe (72 ; 112) en contrôlant la croissance thermique de la structure de boîtier fixe (72 ; 112) en fournissant sélectivement un flux d'eau (60) en contact thermique avec la structure de boîtier fixe (72 ; 112) ;
la communication du flux d'eau (60,94) de la structure de boîtier fixe (72 ; 112) à un système d'évaporateur (42) ; et
la transformation du flux d'eau (60,94) en un flux de vapeur (48) en utilisant la chaleur du flux de gaz d'échappement (40) dans le système d'évaporateur (42).

14. Procédé selon la revendication 13, comprenant en outre la surveillance d'une température de la structure de boîtier fixe (72 ; 112) et le contrôle du flux d'eau (60) en contact thermique avec la structure de boîtier fixe (72 ; 112) afin de maintenir un jeu prédéfini (78 ; 126) entre l'extrémité (76;124) de l'aube rotative (74;122) et une surface intérieure (80) de la structure de boîtier fixe (72 ; 112).

15. Procédé selon la revendication 14, contrôlant proportionnellement le flux d'eau (60) au moyen d'une vanne de régulation (62 ; 120) basée sur une température détectée de la structure de boîtier fixe (72;112) et/ou un paramètre de fonctionnement actuel du moteur.
